# EUROPEAN PATENT SPECIFICATION

(11) **EP 0 565 743 B1**
(45) Date of publication and mention of the grant of the patent: **08.01.1997**
(21) Application number: 92106316.0
(22) Date of filing: 11.04.1992
(51) Int. Cl.: C09D 183/04, C03C 17/30, C04B 41/49

(54) **Treatment of articles to impart non-stick and water repellent properties thereto**
Behandlung, um Artikel nichthaftend und wasserabstossend zu machen
Traitement d'articles afin de les rendre anti-adhérents et hydrofuges

(43) Date of publication of application: 20.10.1993
(73) Proprietor: CORNING FRANCE, FR-77210 Avon (FR)
(72) Inventor: Carre, Alain, SP FR 02-12, Corning N.Y. 14831 (US)
(74) Representative: Aron, Georges

(56) References cited:
- FR-A- 2 032 038
- GB-A- 1 274 368
- GB-A- 1 592 569
- US-A- 2 927 909
- US-A- 3 244 541

## Description

### Background of the Invention

This invention concerns a composition and a process to treat articles, particularly glass and glass-ceramic articles, with the view to give them durable non-stick and water repellent properties.

Non-stick and water repellent articles have been obtained by coating them with a polytetrafluoroethylene (PTFE) layer. For example, U. S. Patent No. 4,683,168 (Hares et al.) and French Patent Application No. 88 00025 (U. S. Patent No. 4,961,996, Carre et al.) describe processes to coat glass or glass-ceramic articles with a view to manufacturing cooking utensils. However, PTFE coatings exhibit the disadvantage of being opaque, to require a thermal sintering process at 350°-400°C for their production, and to be relatively costly.

U. S. Patent No. 3,579,540 (Ohlhausen) describes a process and a composition for conferring water repellent properties on non-porous substrates. The composition, which includes a polyalkylsiloxane such as a polydimethylsiloxane and a mineral acid dissolved in water, is simply applied to the substrate to be treated. That substrate can be, for example, a car windshield that one wants to make non-wettable by rain.

U.S. Patent No. 3 958 073 (Trevisan et al.) describes a composition for treating glass surfaces to improve their resistance to hydrolysis and to chemical agents, as well as to give them water repellent properties, which composition includes an organo-borosiloxane polymer and an organic compound of titanium, zirconium, tin, or vanadium in a solvent. After application of the composition and evaporation of the solvent, the glass article is treated at 200°-400°C to produce a reaction product in the form of a thin layer chemically grafted onto the glass surface.

WO 86/04346 [European Patent Application No. 208 744 (J.G.M. Frew)] describes a composition capable of making hydrophilic surfaces such as glass surfaces hydrophobic, which composition is a liquid mixture obtained by mixing a liquid organic alcohol and an organic sulfonate with a polysiloxane, and then blending that mixture with a liquid fluorinated hydrocarbon.

US-A-3 244 541 discloses a composition capable of forming transparent, water-repellent films, which consists of a dialkyldialkoxysilane and/or an alkyltrialkoxysilane and 0.1 to 10% by volume of an acid dissolved therein.

GB-A-1 592 569 discloses a process for imparting hydrophobicity to mineral substrates, which comprises applying to said substrates a dispersion or emulsion of an alkyltrialkoxysilane, a surfactant and water or a water/alcohol mixture.

Numerous processes are known for making a non-stick or water repellent glass surface by means of a coating ; for example, a varnish coating based upon a silicone resin curable in the presence of an appropriate catalyst. The resultant coatings, however, exhibit the disadvantages of being relatively thick (several microns in thickness) and readily scratchable.

Further, FR-A-2 032 038 describes compositions for printing various surfaces which comprise, as an adhesive component, a polycondensate produced from alkylalkoxysilanes dissolved in an alcohol or a polar solvent. These compositions serve for a purpose which is quite opposite to that of the present anti-adhesive or non-stick compositions.

Therefore, the primary objective of the present invention was to provide a composition and a process to treat the surface of an article, in particular a glass or glass-ceramic article, in order to impart thereto excellent and durable properties of non-stickability and water repellency, among other things.

### Summary of the Invention

More precisely, the present invention contemplates a composition to treat the surface of an inorganic article, that surface containing hydroxyl groups, the composition being characterized by the fact that it includes the product resulting from the mixture of two components:
(a) a silane having the formula

   RₙSiX₄₋ₙ

   wherein each R is chosen independently from among the methyl, ethyl, and propyl radicals, unsubstituted or partially or totally substituted by fluorine atoms; X is a hydrolyzable group chosen from among the methoxy, ethoxy, and chloro groups; and n = 1 or 2; and
(b) a mixture of lower alkanol and water; with the conditions that:
   (i) the silane constituent is comprised of at least 20 mole percent of a silane having the above formula where n = 2; and
   (ii) the water is acidified at least in the cases where X is a methoxy or ethoxy group.

The subject invention also contemplates a process for treating the surface of an inorganic article, the surface of the article containing hydroxyl groups, in order to impart non-stick and water repellent properties thereto, characterized by the fact that the process consists of two steps:
(a) applying a layer of the inventive composition onto a surface of the article; and thereafter
(b) eliminating the alkanol-water mixture and allowing or causing a reaction to take place between the product of the hydrolysis and/or of the partial condensation of the silane constituent with the hydroxyl groups present in the surface of the article in order to obtain a very thin polysiloxane coating which is solid, transparent, non-stick, and water repellent, and which is durably bonded to the surface of the article.

Among the usable silanes encompassed within the above formula, wherein R is a non-substituted lower alkyl radical, the methyl group is the most preferred. The non-substituted silanes are preferred from a practical point of view because they are more economical than silanes containing fluorinated radicals. Silanes in which X is a methoxy or ethoxy group are also preferred because chlorinated silanes produce hydrochloric acid during the hydrolysis reaction which is an environmental hazard that must be removed. Finally, the silanes wherein X is an methoxy group produce methanol which can lead to toxicological problems in certain applications.

The silane component can be formed exclusively of a silane having the above formula where n = 2 or of a mixture of a silane having the above formula where n = 2 and of a silane having the above formula where n = 1; providing, nevertheless, that the silane having the above formula where n = 2 constitutes at least 20 mole percent of the silane mixture. The most preferred silane of the above formula where n = 2 is dimethyldiethoxysilane and the most preferred silane of the above formula where n = 1 is methyltriethoxysilane.

The alkanol employed in the alkanol-water mixture can be a lower alkanol such as methanol, ethanol, or a propanol such as isopropanol. Ethanol is preferred. The role of the alkanol is simply to permit the solution and/or the dispersion of the silane in the aqueous mixture, the silane not being soluble in water.

Where a non-chlorinated silane constituent is used, the alkanol-water mixture can conveniently contain 5-93% by volume water, preferably 5-60% by volume. In contrast, where a chlorinated silane component is employed, the proportion of water in the alkanol-water mixture can be reduced to a very small amount, i.e., to the order of trace amounts.

The water must be acidified with a mineral or organic acid, for example, to reduce the pH below approximately 4 when an alkoxylated silane constituent is used. Examples of operable acids include hydrochloric acid, sulfuric acid, and acetic acid. When a chlorinated silane constituent is utilized, it is not necessary to pre-acidify the water because it is acidified automatically as soon as the silane hydrolysis commences as a result of the formation of HCl.

The proportion of silane in the composition is not very critical and can be, for example, about 0.06-1 mole/liter of the alkanol-water mixture, preferably about 0.1-0.3 mole/liter of the mixture.

When the silane constituent is blended into the acidified mixture of alkanol and water, the X groups are hydrolyzed into silanol groups which can react by condensation with the OH groups present at the surface of an inorganic substance such as a glass, a glass-ceramic, a ceramic material or a metal to form stable bonds with the surface. The silanols can also undergo self-condensation reactions with the formation of hydroxylated oligomers of polymers which can react with the OH groups present at the surface of the inorganic substance in an analogous way to monomer silanols. The overall result of these reactions is the formation of a very thin coating of a polysiloxane durably bonded to the surface of the treated inorganic substance and conferring non-stick and water repellent properties to that surface. It must be recognized that the inventive compositions for treating the surfaces of inorganic substances exhibit limited stability only and, therefore, must be used within a few days of their preparation.

The reaction of the silanol groups with the OH groups on the surface of the inorganic article to be treated can be carried out by allowing the surface coated with the inventive composition to be exposed to ambient temperature. That spontaneous reaction is rather slow (about 24 hours), however, and therefore is not very practical from an industrial point of view. Thus, it is usually preferred to accelerate the reaction with an appropriate heat treatment. This thermal treatment can consist in heating an article whose surface has first been coated with a liquid layer of the inventive composition to a temperature about 100°-300°C for a period of time which can be, for example, about 5-30 minutes, depending upon the particular composition used for the treatment and upon the temperature of heating.

The preferred manner to form the polysiloxane coating, however, consists in briefly dipping, i.e., for a few seconds, the article to be treated while it is at an elevated temperature, e.g., 100°-300°C, into a bath of the inventive composition, and then to permit the article to cool naturally, the evaporation of the alkanol-water mixture and the condensation reactions taking place during that cooling. This mode of forming the desired coating is especially economical and convenient in operation for glass and glass-ceramic articles, the manufacturing of which involves heating processes, e.g., in forming the article, annealing, tempering, ceramming, or other thermal treatment process. With such articles the inventive process can be implemented in a production line while the article is at a temperature sufficiently high to be suitable for carrying out the thermal treatment necessary for the formation of the polysiloxane coating. Of course, instead of dipping the hot article into a bath to cool it with the inventive treatment composition, the composition can be applied to the surface of the hot article via other methods, e.g., by painting, spinning, or spraying.

The coating obtained from the inventive compositions imparts non-stick, hydrophobic, and water repellent properties to the coated surface which are surprisingly superior to those that can be obtained from a composition based upon silanes of the above formula in which the silane of the above formula wherein n = 1 is the only silane used or it constitutes more than 80 mole percent of the mixture of silanes. This result is surprising because one would theorize that silanes having three hydrolyzable groups, thereby leading to three OH groups after hydrolysis, would exhibit greater reactivity than silanes having only two hydrolyzable groups.

### Prior Art

In addition to the patents referred to above, the following patents are also deemed to have some relevance to the present invention.

U. S. Patent No. 3,308,079 (Haenni) discloses release coatings involving the combination of a linear, hydroxylated, diorganopolysiloxane, a phenylmethylpolysiloxane, and an organopolysiloxane block copolymer which is heat cured onto a substrate. The coating cures through condensation reactions of the silanols present in the siloxane components.

U. S. Patent No. 3,308,080 (Haenni) describes a similar release coating except that the phenylmethylpolysiloxane does not form part of the composition.

U. S. Patent No. 3,419,514 (Hadlock) refers to an "air-dried" version of an organopolysiloxane-based release coating. The coating contains a phenylmethylpolysiloxane having a hydroxyl content of at least 3% by weight, a phenyl-to-silicon ratio of at least 0.3 and a total phenyl- and methyl-to-silicon ratio of from 1.2-1.7; RO(R¹CHCH₂O)₂H; methylpolysiloxane fluid having at least 2% by weight of silicon bonded hydroxyl groups; and

CH₃Si(OC=OCH₃)₃.

U. S. Patent No. 4,204,021 (Becker) is concerned with a composite layer concept for release purposes wherein a first coating is applied to a porous ceramic layer and impregnates the porous ceramic layer. The top layer is a release layer containing organopolysiloxanes wherein there is present in the organopolysiloxane an unsaturated radical on silicon which, when combined with a photosensitizer, can be cured by a free radical light source.

U. S. Patent No. 4,585,705 (Broderick et al.) records organopolysiloxane release coatings which are curable on a substrate and which consist of a base siloxane copolymer containing CH₃SiO_{3/2} units, C₆H₅SiO_{3/2} units, C₆H₅(CH₃)SiO units, and (C₆H₅)₂SiO units along with CH₃SiO_{3/2}, a fluid polysiloxane, and a curing agent.

U. S. Patent No. 4,677, 147 (Swihart et al.) illustrates release coatings comprising a thermosettable polyorganosiloxane resin, a non-curable polydiorganosiloxane fluid, and a combination of at least two metal-containing compounds.

U. S. Patent No. 4,753,827 (Yoldas et al.) is directed to the preparation of an organoalkoxysilane/metal oxide sol-gel composition. The composition is prepared by partially hydrolyzing in an organic solution an organoalkoxysilane having the general formula

RₓSi(OR¹)₄₋ₓ

wherein R is an organic radical, R¹ is a low molecular weight alkyl radical, and x is at least one and less than four, and then reacting the product of hydrolysis with a titanium or zirconium alkoxide of the general formula M(OR¹¹)₄, wherein M is titanium or zirconium and R¹¹ is a lower alkyl radical. The final combination is hydrolyzed, dried, and condensed to form an organosiloxane/metal oxide abrasion resistant coating on a substrate.

U. S. Patent No. 4,895,766 (Saad) is drawn to the formulation of release coatings consisting of:
(a) a base silicone resin having alkoxy or acyloxy functional groups and a viscosity between 10-200,000 centipoises;
(b) a base polydiorganosiloxane fluid having functional groups to react with the base resin;
(c) a hydroxy functional polyphenylsiloxane resin;
(d) a non-thermosettable polydiorganopolysiloxane fluid; and
(e) an effective amount of a condensation catalyst.

U. S. Patent No. 4,961,996 (Carre et al.) discloses composite non-stick coatings for substrates having surfaces containing OH groups. A first coating is applied to the substrate which is obtained by making an appropriate bifunctional organosilane react with a polyamic-acid precursor of polyamide-imide and with OH groups of the substrate surface, the reaction product then being dried and the polyamic-acid being converted into a polyamide-imide by heating. Thereafter, a non-stick polymer coating selected from the group of silicone and fluorocarbon polymers is applied thereover.

### Description of Preferred Embodiments

The invention will now be illustrated with the following non-limitative examples. In these examples the properties of the surfaces treated in accordance with the present invention have been determined with the following test procedures:

Hydrophobia - This property is measured by the contact angle θ formed by a water drop settled on the treated solid surface. On an untreated clean glass surface, θ is equal to about 50°. A surface is deemed to be hydrophobic if θ is higher than 90°.

Water Repellency - This property is measured quantitatively by determining the smallest volume, V, of a water drop able to slide along spontaneously under gravity after having been settled on a vertically held treated surface. The property of water repellency is considered to be better when V is smaller. To evaluate V a series of water droplets of different volumes, Vᵢ, from 1-40 microliters, is settled on a plate of the treated material placed upon a tiltable plane which is initially in a horizontal position. The tilting angle, α, with respect to the horizontal is increased continuously so that each drop of volume Vᵢ moves down along the treated plate at a value αᵢ of the tilting angle.

The parameters Vᵢ and αᵢ are related to each other and it can be demonstrated from a study of "Wetting, Spreading and Adhesion", E. Wolfram and R. Faust, edited by J. F. Padday, Academic Press, 1978, page 213, that Vᵢ^{2/3} x Sin αᵢ is a constant K. From the average value of K, corresponding to a treated or untreated surface, V is obtained for αᵢ=90°, so that V=K^{3/2}.

Non-Stickability - This property was evaluated for glass ovenware in baking cake recipes and in rating the ease by which the cake could be removed from the ovenware, the presence of sticky spots, and the cleanability of the ovenware.

Detergent Durability - The resistance of the inventive coatings to the action of detergents was determined by washing the treated articles a given number of times in a dishwasher. After each series of washings, the hydrophobia and non-stickability of the treated articles were evaluated.

Hydrolytic Resistance - Hydrolytic resistance of the treated articles was studied both in cold and in boiling water. Water repellency was followed as a function of the contact time with water for windows, automobile wind-shields, and similar applications.

Other Testing - Other specific tests were performed in certain instances, e.g., the evaluation of the lifetime of electrical insulators fabricated from tempered glass after being subjected simultaneously to the actions of high voltage and salt spray. The thermal stability of the inventive coatings was also sometimes evaluated, particularly for cookware applications.

### Example 1

A series of eight solutions having the following compositions was prepared

| | |
|---|---|
| Ethanol | 93% by volume |
| Water at pH4 | 7% by volume |
| Dimethyldiethoxysilane + Methyltriethoxysilane | 0.2 mole/liter |

in various relative proportions of the two silanes between 0-100 mole percent, as is illustrated in Table I below. The solutions were allowed to age for 24 hours before being applied as coatings. Plates of soda lime silica glass were immersed for two minutes at ambient temperature in a bath of each solution, withdrawn from the bath, and then placed in an oven operating at 210°C for 30 minutes. The water contact angle θ (an evaluation of hydrophobia) was measured on the resulting treated plates. The measurements are summarized in Table I; the higher the θ, the better the hydrophobia.

**TABLE I**

| Compositions | 1 | 2 | 3 | 4 | 5 | 6 | 7 | 8 |
|---|---|---|---|---|---|---|---|---|
| Dimethyldiethoxysilane, mole % | 100 | 60 | 50 | 40 | 30 | 20 | 10 | 0 |
| Methyltrithoxysilane, mole % | 0 | 40 | 50 | 60 | 70 | 80 | 90 | 100 |
| θ in degrees | 104 | 104 | 104.5 | 101 | 103.5 | 102 | 90 | 75 |

As can be observed from the recorded measurements, the more effective compositions are those which contain about 20-100 mole percent dimethyldiethoxysilane of the total silanes having the above formula.

### Example 2

A solution of the following composition was prepared:

| | |
|---|---|
| Ethanol | 85% by volume |
| 12N aqueous solution of HCl | 15% by volume |
| Dimethyldiethoxysilane | 0.2 mole/liter |

Plates of soda lime silica glass were immersed for two minutes at ambient temperature into a bath of the solution, the plates were removed from the bath, and thereafter moved into an oven operating at 220°C for 20 minutes. The resulting treated plates were submitted to both the hydrophobia test and the water repellency test with evaluations being performed on unaged plates as well as on plates having been previously subjected to the action of cold water (cw) or boiling water (bw) for the indicated times. For comparison purposes, the same experiments were performed on plates treated with the commercial RAIN-X brand release coating (a product of the type disclosed in U. S. Patent No. 3,579,540 supra), as well as on blank glass plates, i.e., glass plates having received no treatment. Table II summarizes the conditions of testing and the results obtained.

**TABLE II**

| Treatment | No Aging | 15 hrs cw | 30 hrs cw | 15 min bw | 30 min bw | 60 min bw | 180 min bw | 480 min bw |
|---|---|---|---|---|---|---|---|---|
| Blanks θ (deg.) | 42.5 | 31 | 44 | 50.5 | 58.5 | 51.5 | -- | -- |
| V (10⁻⁶1) | 4.9 | 6.8 | 6.5 | 4.9 | 6.3 | 6.3 | -- | -- |
| RAIN-X θ (deg.) | 108 | 94.5 | 96.3 | 67.5 | 74 | 72 | -- | -- |
| V(10⁻⁶1) | 1.5 | 3.5 | 8.6 | 17.7 | 17 | 17.7 | -- | -- |
| Invention θ (deg.) | 105 | 103.3 | 103.3 | 99.5 | 102.3 | 99.5 | 99.5 | 95.5 |
| V(10⁻⁶1) | 1.8 | 2.6 | 4.0 | 1.8 | 2.2 | 2.0 | 2.2 | 4.0 |

Table II clearly illustrates that the inventive coating imparted excellent hydrophobic and water repellent properties to the glass plates. It appears, furthermore, that the plates treated according to the present invention demonstrate better hydrolytic resistance than those treated with the commercial product.

### Example 3

The following solution was prepared:

| | |
|---|---|
| Ethanol | 40% by volume |
| 0.1N aqueous HCl solution | 60% by volume |
| Dimethyldiethoxysilane | 0.1 mole/liter |

Glass electrical insulators were preheated to 100°C, immersed into a bath of the above solution for two minutes, withdrawn from the solution, and then placed into an oven operating at 220°C for 10 minutes. The resulting treated insulators exhibited such excellent water repellent, non-stick, and hydrolytic properties that electrolytic corrosion and the formation of a conductive solid film of polluting materials on the insulators were prevented. Thus, when they were compared to identical insulators which had received no treatment, only the insulators subjected to the inventive treatment successfully passed a 1000 hour test under artificial fog conditions (a salt spray) and high voltage (15 kilovolts per insulator on a line of 10 insulators) without deterioration or breakage.

### Example 4

A treatment solution of the following composition was prepared:

| | |
|---|---|
| Ethanol | 93% by volume |
| Water at pHl | 7% by volume |
| Dimethyldiethoxysilane | 0.18 mole/liter |
| Methyltriethoxysilane | 0.02 mole/liter |

PYREX® brand dishes were immersed into a bath of that solution for two minutes at ambient temperature, the dishes were removed from the bath, and then inserted into an oven operating at 210°C for 30 minutes. The contact angle measured on the dishes was on the order of 100°. After 250 washings in a dishwasher containing an appropriate amount of detergent, was still very high, i.e., about 96°. Practical food cooking tests demonstrated a significant reduction in food sticking and improved cleanability when compared with untreated PYREX® dishes. Those advantages were still present after the 250 washings in the dishwasher.

### Example 5

| | |
|---|---|
| Ethanol | 93% by volume |
| Water at pHl | 7% by volume |
| Dimethyldiethoxysilane | 0.06 mole/liter |
| Methyltriethoxysilane | 0.04 mole/liter |

PYREX® dishes were immersed into a bath of that solution for two minutes at ambient temperature, withdrawn from the bath, and thereafter moved into an oven operating at 210°C for 20 minutes. The treated dishes demonstrated excellent hydrophobic and non-stick properties even after 210 washings in a dishwasher with an appropriate amount of detergent. The thermal durability of the coatings was evaluated on the basis of contact angle measurements; θ was still equal to 96° after an exposure of 100 hours at 210°C.

### Example 6

The procedure of Example 5 was repeated, but ethanol was replaced with isopropanol. Results equivalent to those of Example 5 were obtained; hence, demonstrating that the nature of the alkanol can be modified without adversely affecting the effectiveness of the inventive coatings.

### Example 7

The solution composition of Example 5 was sprayed onto PYREX® dishes preheated at 70°C and the dishes thereafter placed in an oven operating at 210°C for 20 minutes. A high contact angle θ of 98° and good non-stick properties were observed even after 160 washings in a dishwasher with an appropriate amount of detergent.

### Example 8

PYREX® dishes were preheated to 220°C and immersed very briefly (about 2-3 seconds) into a bath of the solution composition of Example 3. After removal from the bath, the dishes were allowed to cool in the ambient environment to room temperature. That quick and inexpensive treatment process enabled excellent non-stick and hydrophobic properties (θ=96°) to be obtained.

### Examples 9 and 10

The procedure of Example 8 was repeated but the dimethyldiethoxysilane concentration was increased to 0.5 mole/liter and 1 mole/liter, respectively. Contact angle θ was 94.5° and 93.5° respectively, thereby illustrating that increasing the silane concentration does not necessarily lead to an improvement in hydrophobic properties.

### Example 11

PYREX® ovenware dishes were taken from the production line at the air tempering section thereof and immersed briefly (about 2-3 seconds) into the solution composition of Example 3. The temperatures of the dishes before immersion were selected between 180°-300°C. After immersion, the dishes were allowed to cool in the ambient environment to room temperature.

Non-stick properties were evaluated and cooking tests were performed on the treated dishes taken as new and after 200 washings in a dishwasher. In all instances excellent and durable non-stick properties were observed, with a contact angle θ being virtually constant at 95°. The treated dishes exhibited a clean aspect and a non-greasy touch.

### Example 12

Miscellaneous articles, such as optical lenses, sunglasses, and sideview mirrors, were coated with compositions similar to those described in the preceding examples to impart hydrophobic, water repellent, and non-stick properties to them and to therefore create anti-rain and anti-fouling effects.

### Example 13

Soda lime silica glass plates coated with a conductive film of tin oxide (surface resistivity of 6 ohms/square) were immersed for two minutes into a bath of the solution composition described in Example 2. The plates were withdrawn from the bath and moved into an oven operating at 220°C for 20 minutes. The contact angle θ measured on the treated tin oxide coating was 110°. This experiment demonstrated that the inventive treatment can be applied advantageously to surfaces other than glass surfaces.

### Example 14

Glass microscope slides were immersed for two minutes at ambient temperature into a bath of a composition obtained by adding 0.1 mole of 3,3,3-trifluoropropylmethyldichlorosilane to 1 liter of isopropanol containing traces of water. Thereafter, the slides were removed from the bath and heated for 30 minutes in an oven operating at 120°C. That treatment raised contact angle θ from 45° (untreated slides) to 88.5°.

### Example 15

A solution containing less than 10% by volume ethanol was prepared in accordance with the following steps:
First, the following components were mixed together for 24 hours:

| | |
|---|---|
| Ethanol | 36.3 cm³ |
| 1N aqueous HCl solution | 5 cm³ |
| Dimethyldiethoxysilane | 8.7 cm³ |

Second, that mixture was diluted, accompanied by vigorous stirring, with 450 cm³ of distilled water in order to obtain an emulsion consisting of:

| | |
|---|---|
| Ethanol | 7.5% by volume |
| Water at pHl | 92.5% by volume |
| Silane | 0.1 mole/liter |

That emulsion was spread onto the surface of PYREX dishes preheated to 280°C. After allowing the dishes to cool in the ambient environment, a contact angle of about 101° was measured on the dishes. In addition, the dishes exhibited excellent non-stick properties toward food.

## Claims

1. A composition for preparing a transparent coating capable of imparting hydrophobic, non-stick, and water repellency properties to the surface of inorganic articles, which surface contains hydroxyl groups, said compositions being characterized by the fact that it consists essentially of a mixture of two components:
(a) a silane having the formula
RₙSiX₄₋ₙ
wherein each R is chosen independently from among the methyl, ethyl, and propyl radicals, unsubstituted or partially or totally substituted by fluorine atoms; X is a hydrolyzable group chosen from among the methoxy, ethoxy, and chloro groups; and n = 1 or 2; and
(b) a mixture of a lower alkanol and water; with the conditions that
(i) the silane component is comprised of at least 20 mole percent of a silane having the above formula where n = 2; and
(ii) the water is acidified at least in the cases where X is a methoxy or ethoxy group.

2. A composition according to claim 1 wherein R is a non-substituted methyl, ethyl, or propyl radical and X is a methoxy or ethoxy group.

3. A composition according to claim 1 wherein the alkanol is selected from the group consisting of methanol, ethanol, n-propanol, and isopropanol.

4. A composition according to claim 1 wherein the alkanol-water mixture contains 5-93% by volume water.

5. A composition according to claim 2 wherein the water is acidified to a pH lower than 4.

6. A composition according to claim 1 wherein the concentration of the silane component is about 0.06-1 mole/liter of the alkanol-water mixture.

7. A composition according to claim 6 wherein the concentration of the silane component is about 0.1-0.3 mole/liter of the alkanol-water mixture.

8. A composition according to claim 1 wherein said inorganic article is selected from the group consisting of glass, a glass-ceramic, and a ceramic.

9. A method of using the composition of any one of claims 1-8 for providing a transparent coating on the surface of an inorganic article which is capable of imparting hydrophobic, non-stick, and water repellency properties to the surface of the inorganic article when said surface contains hydroxyl groups, said method being characterized by the fact that it consists essentially of two steps:
(1) applying to the surface of the inorganic article a layer of a composition consisting essentially of a mixture of two components:
(a) a silane having the formula
RₙSiX₄₋ₙ
wherein each R is chosen independently from the methyl, ethyl, and propyl radicals, unsubstituted or partially or totally substituted by fluorine atoms; X is a hydrolyzable group chosen from among the methoxy, ethoxy, and chloro groups; and n = 1 or 2; and
(b) a mixture of a lower alkanol and water; with the conditions that
(i) the silane component is comprised of at least 20 mole percent of a silane having the above formula where n = 2; and
(ii) the water is acidified at least in the cases where X is a methoxy or ethoxy group;
(2) eliminating the alkanol-water mixture and allowing or causing a reaction to take place between tee product of the hydrolysis and/or the partial condensation of the silane component with the hydroxyl groups present in the surface of the article to form a coating which is bonded to the surface of the article.

10. A method according to claim 9 wherein Step (2) is produced by heating the article to a temperature of about 100^{o}-300^{o}C after applying the composition layer of Step (1), and/or wherein the application of the composition layer of Step (1) is carried out while the article is at a temperature of about 100^{o}-300^{o}C.

## Patentansprüche

1. Zusammensetzung zur Herstellung einer transparenten Beschichtung, die dazu in der Lage ist, der Oberfläche von anorganischen Gegenständen, die Hydroxylgruppen aufweist, hydrophobe, haftabweisende und wasserabstoßende Eigenschaften zu verleihen, wobei die Zusammensetzung durch die Tatsache gekennzeichnet ist, daß sie im wesentlichen aus einer Mischung aus zwei Komponenten besteht:
(a) einem Silan mit der Formel
RₙSiX₄₋ₙ,
wobei jedes R unabhängig aus Methyl-, Ethyl- und Propylresten, unsubstituiert oder teilweise oder vollständig durch Fluoratome substituiert, ausgewählt ist; X eine hydrolisierbare Gruppe ist, die aus Methoxy-, Ethoxy- und Chlorgruppen ausgewählt ist; und n = 1 oder 2; und
(b) einer Mischung aus einem niederen Alkanol und Wasser; unter den Bedingungen, daß
(i) die Silankomponente wenigstens 20 mol-% eines Silans mit der obigen Formel, wobei n = 2, umfaßt; und
(ii) das Wasser wenigstens in den Fällen, in denen X eine Methoxy- oder Ethoxygruppe ist, angesäuert wird.

2. Zusammensetzung nach Anspruch 1, wobei R ein unsubstituierter Methyl-, Ethyl- oder Propylrest ist und X eine Methoxy- oder Ethoxygruppe ist.

3. Zusammensetzung nach Anspruch 1, wobei das Alkanol aus der aus Methanol, Ethanol, n-Propanol und Isopropanol bestehenden Gruppe ausgewählt ist.

4. Zusammensetzung nach Anspruch 1, wobei die Alkanol-Wasser-Mischung 5 - 93 Vol.-% Wasser enthält.

5. Zusammensetzung nach Anspruch 2, wobei das Wasser auf einen pH-Wert von weniger als 4 angesäuert wird.

6. Zusammensetzung nach Anspruch 1, wobei die Konzentration der Silankomponente etwa 0,06 - 1 mol/l der Alkanol-Wasser-Mischung beträgt.

7. Zusammensetzung nach Anspruch 6, wobei die Konzentration der Silankomponente etwa 0,1 - 0,3 mol/l der Alkanol-Wasser-Mischung beträgt.

8. Zusammensetzung nach Anspruch 1, wobei der anorganische Gegenstand aus der aus Glas, einer Glaskeramik und einer Keramik bestehenden Gruppe ausgewählt wird.

9. Verfahren zur Verwendung der Zusammensetzung nach einem der Ansprüche 1 - 8 zum Bereitstellen einer transparenten Beschichtung auf der Oberfläche eines anorganischen Gegenstandes, die dazu in der Lage ist, der Oberfläche des anorganischen Gegenstandes, wenn die Oberfläche Hydroxylgruppen aufweist, hydrophobe, haftabweisende und wasserabstoßende Eigenschaften zu verleihen, wobei das Verfahren durch die Tatsache gekennzeichnet ist, daß es im wesentlichen aus zwei Schritten besteht:
(1) dem Auftragen einer Schicht einer Zusammensetzung, die im wesentlichen aus einer Mischung von zwei Komponenten besteht:
(a) einem Silan mit der Formel
RₙSiX₄₋ₙ,
wobei jedes R unabhängig aus Methyl-, Ethyl- und Propylresten, unsubstituiert oder teilweise oder vollständig durch Fluoratome substituiert, ausgewählt ist; X eine hydrolisierbare Gruppe ist, die aus Methoxy-, Ethoxy- und Chlorgruppen ausgewählt ist; und n = 1 oder 2; und
(b) einer Mischung aus einem niederen Alkanol und Wasser; unter den Bedingungen, daß
(i) die Silankomponente wenigstens 20 mol-% eines Silans mit der obigen Formel, wobei n = 2, umfaßt; und
(ii) das Wasser wenigstens in den Fällen, in denen X eine Methoxy- oder Ethoxygruppe ist, angesäuert wird;
auf die Oberfläche des anorganischen Gegenstandes;
(2) dem Eliminieren der Alkanol-Wasser-Mischung und dem Zulassen oder Herbeiführen einer Reaktion zwischen dem Produkt der Hydrolyse und/oder der partiellen Kondensation der Silankomponente mit den auf der Oberfläche des Gegenstandes vorhandenen Hydroxylgruppen, wodurch eine Beschichtung gebildet wird, die an die Oberfläche des Gegenstandes gebunden ist.

10. Verfahren nach Anspruch 9, wobei Schritt (2) erzeugt wird, indem der Gegenstand nach dem Auftragen der Zusammensetzungsschicht aus Schritt (1) auf eine Temperatur von etwa 100 °C - 300 °C erwärmt wird und/oder wobei das Auftragen der Zusammensetzungsschicht aus Schritt (1) durchgeführt wird, während der Gegenstand eine Temperatur von etwa 100 °C - 300 °C aufweist.

## Revendications

1. Une composition pour préparer un revêtement transparent capable de conférer à la surface d'articles minéraux dont la surface porte des groupes hydroxyle, des propriétés hydrophobes, d'anti-adhérence et de répulsion d'eau, cette composition étant caractérisée en ce qu'elle consiste essentiellement en un mélange de deux constituants:
(a) un silane de la formule Rₙ SiX₄₋ₙ où chaque R est indépendamment choisi parmi les radicaux méthyle, éthyle et propyle, non substitués ou substitués partiellement ou totalement par des atomes de fluor ; X est un groupe hydrolysable choisi parmi les groupes méthoxy, éthoxy et chloro; et n = 1 ou 2; et
(b) un mélange d'alcanol inférieur et d'eau ; avec les conditions que (i) le constituant silane soit constitué à raison d'au moins 20 moles % d'un silane de la formule ci-dessus où n = 2 ; et (ii) l'eau soit acidifiée au moins dans le cas où X est un groupe méthoxy ou éthoxy.

2. Une composition selon la revendication 1, dans laquelle R est un radical méthyle, éthyle ou propyle non substitué, et X est un groupe méthoxy ou éthoxy.

3. Une composition selon la revendication 1, dans laquelle l'alcanol est choisi dans le groupe constitué par le méthanol, l'éthanol, le n-propanol, et l'isopropanol.

4. Une composition selon la revendication 1, dans laquelle le mélange alcanol-eau contient 5 à 93% en volume d'eau.

5. Une composition selon la revendication 2, dans laquelle l'eau est acidifiée à un pH inférieur à 4.

6. Une composition selon la revendication 1, dans laquelle la concentration du constituant silane est d'environ 0,06 à 1 mole par litre du mélange alcanol-eau.

7. Une composition selon la revendication 6, dans laquelle la concentration du constituant silane est d'environ 0,1 à 0,3 mole par litre du mélange alcanol-eau.

8. Une composition selon la revendication 1, dans laquelle ledit article minéral est choisi dans le groupe constitué d'un verre, d'une vitrocéramique, et d'une matière céramique.

9. Un procédé d'utilisation de la composition de l'une quelconque des revendications 1-8, pour former un revêtement transparent sur la surface d'un article minéral qui est capable de conférer des propriétés hydrophobes, d'anti-adhérence et de répulsion d'eau à la surface de l'article minéral lorsque cette surface contient des groupes hydroxyles, ledit procédé étant caractérisé en ce qu'il consiste essentiellement en deux opérations :
(1) on applique à la surface de l'article minéral une couche d'une composition consistant essentiellement en un mélange de deux constituants:
(a) un silane de la formule Rₙ SiX₄₋ₙ où chaque R est indépendamment choisi parmi les radicaux méthyle, éthyle et propyle, non substitués ou substitués partiellement ou totalement par des atomes de fluor ; X est un groupe hydrolysable choisi parmi les groupes méthoxy, éthoxy et chloro; et n = 1 ou 2 ; et
(b) un mélange d'alcanol inférieur et d'eau ; avec les conditions que (i) le constituant silane soit constitué à raison d'au moins 20 moles % d'un silane de la formule ci-dessus où n = 2 ; et (ii) l'eau soit acidifiée au moins dans le cas où X est un groupe méthoxy ou éthoxy.
(2) on élimine le mélange alcanol-eau et on laisse ou provoque une réaction entre le produit d'hydrolyse et/ou de condensation partielle du constituant silane avec les groupes hydroxyles présent à la surface de l'article pour former un revêtement qui est lié à la surface de l'article.

10. Un procédé selon la revendication 9, dans lequel l'opération (2) est réalisée en chauffant l'article à une température de 100 à 300°C après application de la couche de composition de l'opération (1), et/ou dans lequel l'application de la couche de composition de l'opération (1) est réalisée tandis que l'article se trouve à une température de 100 à 300°C environ.
